Europäisches Patentamt

European Patent Office

Office européen des brevets

(19)

(11) Veröffentlichungsnummer: **0 453 766 A2**

(12) **EUROPÄISCHE PATENTANMELDUNG**

(21) Anmeldenummer: **91104398.2**

(22) Anmeldetag: **21.03.91**

(51) Int. Cl.⁵: **G09B 9/058**

(30) Priorität: **10.04.90 DE 4012063**

(43) Veröffentlichungstag der Anmeldung:
**30.10.91 Patentblatt 91/44**

(84) Benannte Vertragsstaaten:
**AT BE CH DE DK ES FR GB GR IT LI LU NL SE**

(71) Anmelder: **Niermann, Thomas**
**Keplerstrasse 96**
**W-4300 Essen 1(DE)**

(72) Erfinder: **Niermann, Thomas**
**Keplerstrasse 96**
**W-4300 Essen 1(DE)**

(74) Vertreter: **von Rohr, Hans Wilhelm, Dipl.-Phys.**
**et al**
**Patentanwälte Gesthuysen & von Rohr**
**Huyssenallee 15 Postfach 10 13 33**
**W-4300 Essen 1(DE)**

(54) **Fahrsimulator in Form eines Rollenprüfstandes für ein Zweirad, insbesondere ein mit eigener Motorkraft angetriebenes Zweirad.**

(57) Bei einem Fahrsimulator für ein Zweirad (1), mit einem Tragrahmen (2), mit in dem Tragrahmen (2) in einem bestimmten Abstand voneinander und parallel zueinander gelagerten, antriebstechnisch miteinander verbundenen Fahrbahnsimulations-Walzen (3, 4) auf denen das Vorderrad (5) und das Hinterrad (6) des Zweirades (1) laufen können, mit einer am Tragrahmen (2) parallel zu den Walzen (3, 4) angeordneten Querlaufschiene (7), mit einem auf bzw. in der Querlaufschiene (7) frei hin und her bewegbaren, quer zur Querlaufschiene (7) jedoch exakt geführten Läufer (8) und mit einer Kippbegrenzung für das Zweirad (1), wobei der Läufer (8) über eine Schwinge (9) am Rahmen (10) des Zweirades (1) in einem ganz bestimmten Abstand von der Querlaufschiene (7) um eine horizontale Schwenkachse (11) schwenkbar anbringbar ist und wobei zwischen dem Läufer (8) und der Schwinge (9) eine lediglich eine Drehung der Schwinge (9) gegenüber dem Läufer (8) um die Längsachse der Einheit aus Läufer (8) und Schwinge (9) erlaubende Drehkupplung (12) vorgesehen ist, wird auf einfache Weise eine wirklichkeitsnahe Simulation des Fahr- und Bremsverhaltens ermöglicht, indem die Querlaufschiene (7) nahe der von den Laufflächen der Walzen (3, 4) gebildeten Ebene verläuft und sich die Einheit aus Läufer (8) und Schwinge (9) von der Querlaufschiene (7) aus etwa horizontal erstreckt.

Fig.1

Die Erfindung betrifft einen Fahrsimulator in Form eines Rollenprüfstandes für ein Zweirad entsprechend dem Oberbegriff von Anspruch 1.

Der bekannte Fahrsimulator, von dem die Erfindung ausgeht (EP-A 0 121 186), ist ein Fahrsimulator für ein Fahrrad. Wesentlich ist, daß es sich um einen Fahrsimulator in Form eines Rollenprüfstandes handelt. Bei einem solchen Fahrsimulator drehen sich Vorderrad und Hinterrad des Zweirades auf antriebstechnisch miteinander verbundenen Fahrbahnsimulations-Walzen. Im "Fahrbetrieb" ergeben sich dadurch die für eine Selbststabilisierung des Zweirades erforderlichen Kreiselkräfte. Dabei wird normalerweise das Zweirad unter Muskelkraft des Fahrers bzw. unter eigener Motorkraft laufen, die Fahrbahnsimulations-Walzen also vom Zweirad her angetrieben, möglich ist es aber auch, die Fahrbahnsimulations-Walzen motorisch anzutreiben, so daß Vorderrad und Hinterrad des Zweirades mitgenommen werden.

Nun muß das Zweirad aber auf den Fahrbahnsimulations-Walzen in axialer Richtung gehalten werden, sonst würde es nach vorn oder hinten herunterspringen. Wenn man das realisiert, stabilisiert sich das Zweirad beim "Fahrbetrieb" in seitlicher Richtung selbst. Zum Halten in axialer Richtung dient die parallel zu den Walzen angeordnete Querlaufschiene, an der an einem Läufer der Rahmen des Zweirades gehalten ist.

Bei dem bekannten Fahrsimulator befindet sich die Querlaufschiene in "Fahrtrichtung" mit erheblichem Abstand hinter dem Hinterrad des Zweirades in einer Höhe etwas oberhalb der Achse des Hinterrades. Größere Seitenneigungen erlaubt dieser Fahrsimulator nicht, weil die Drehkupplung für den Läufer am Rahmen einen relativ großen Abstand von der Lauffläche der das Hinterrad tragenden Walze hat. Neigt sich das Fahrrad also, so wird das Hinterrad wegen des sich dann verändernden Abstandes zwischen Querlaufschiene und Rahmen entweder von der Walze angehoben oder von der Walze nach hinten heruntergezogen. Auch die Schrägfahrt des Fahrrades kann nur in ganz eng begrenztem Umfange stattfinden, da sich die Querlaufschiene weit hinter der durch die Achse des Hinterrades verlaufenden Hochachse befindet, um die sich im normalen Fahrverhalten bei Kurvenfahrt ein Zweirad schwenkt.

Der bekannte, zuvor erläuterte Fahrsimulator ist für die Simulation des Fahrverhaltens und des Bremsverhaltens von schnell fahrenden Zweirädern, insbesondere also von Motorrädern, nicht gut einsetzbar. Folglich bleibt man für Motorräder nach wie vor bei computergesteuerten Fahrsimulatoren, bei denen die Fahrsituationen des Motorrades ausschließlich künstlich reproduziert werden, also Fahrsimulatoren, die nicht die Form eines Rollenprüfstandes haben (US-A 4 887 967).

Der Erfindung liegt die Aufgabe zugrunde, den eingangs erläuterten Fahrsimulator in Form eines Rollenprüfstandes so auszugestalten und weiterzubilden, daß für schnell fahrende Zweiräder, insbesondere für Motorräder, auf möglichst einfache Weise eine möglichst wirklichkeitsnahe Simulation des Fahr- und Bremsverhaltens gegeben ist.

Die zuvor aufgezeigte Aufgabe ist durch die Merkmale des kennzeichnenden Teils von Anspruch 1 gelöst. Durch die geänderte Anordnung der Querlaufschiene und deren Anbindung an den Rahmen des Zweirades wird erreicht, daß dieses im "Fahrbetrieb" praktisch überhaupt nicht von dieser Aufhängung in seinem Fahrverhalten beeinträchtigt wird. Durch die Anordnung der Einheit aus Läufer und Schwinge in die oder nahe an die Achse, die von den Aufstandspunkten der Räder des Zweirades auf den Walzen definiert wird, wird erreicht, daß sich das Zweirad seitlich neigen kann, ohne daß sich wirksame Abstände ändern, also unter vollständiger oder jedenfalls nahezu vollständiger Beibehaltung der Längsposition der Vorder- und Hinterräder auf den Walzen. Darüberhinaus wird die Querlaufschiene, die praktisch die Hochachse bildet, um die das Motorrad schwenken kann, so nahe wie möglich an die Lage herangebracht, die bei einem normalen, auf der Straße fahrenden Zweirad von der Hochachse eingenommen wird.

Mit den zuvor erläuterten Maßnahmen wird die gewünschte praxisnahe Fahrsimulation des Zweirades auf dem als Rollenprüfstand ausgeführten Fahrsimulator erreicht.

Im folgenden gibt es nun verschiedene Möglichkeiten, den erfindungsgemäßen Fahrsimulator so auszugestalten und weiterzubilden, daß er in weiterem Maße für die Simulation des Fahr- und Bremsverhaltens von Motorrädern geeignet ist. Dazu wird auf die dem Anspruch 1 nachgeordneten Ansprüche verwiesen.

Weiter bevorzugte Ausgestaltungen und Weiterbildungen der Lehre der Erfindung ergeben sich auch aus der Erläuterung eines bevorzugten Ausführungsbeispiels anhand der Zeichnung.

In der Zeichnung zeigt

Fig. 1    in schematischer Darstellung in einer Seitenansicht ein bevorzugtes Ausführungsbeispiel eines erfindungsgemäßen Fahrsimulators für ein Zweirad, hier ein Motorrad,

Fig. 2    den Fahrsimulator aus Fig. 1 in einer Draufsicht, einige Teile des Zweirades lediglich noch angedeutet,

Fig. 3    die Einheit aus Läufer und Schwinge in Verbindung mit einem Teilstück der Querlaufschiene des Fahrsimulators aus Fig. 1,

Fig. 4    die in Fig. 3 dargestellte Einheit in einer Seitenansicht und

Fig. 5     einen als PKW-Anhänger ausgeführten erfindungsgemäßen Fahrsimulator in einer Seitenansicht.

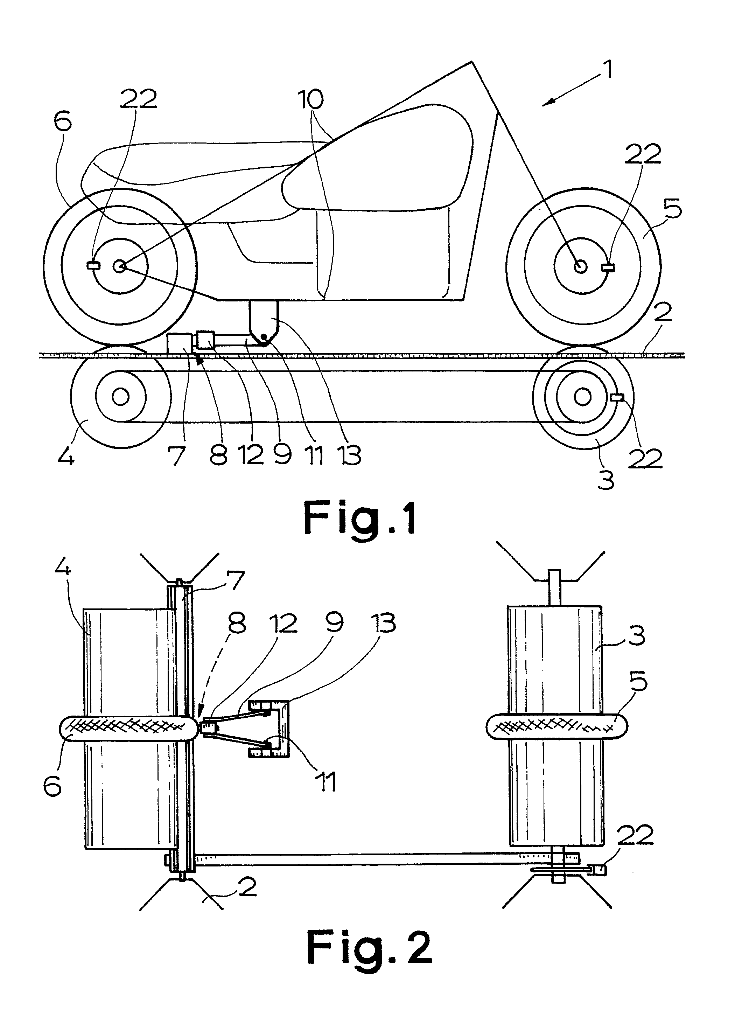

Der in Fig. 1 dargestellte Fahrsimulator ist zur Simulation des Fahr- und Bremsverhaltens eines Zweirades 1, hier eines Motorrades bestimmt. Wegen der hohen "Geschwindigkeit" eines Motorrades 1, also wegen der relativ hohen Drehzahl der Räder, ist erfindungsgemäß eine besondere Gestaltung des Fahrsimulators gewählt worden. Selbstverständlich kann die erfindungsgemäße Konstruktion auch für ein Fahrrad verwendet werden, besondere Bedeutung hat die Erfindung aber für Motorräder.

Der Fahrsimulator weist zunächst einen Tragrahmen 2 und in dem Tragrahmen 2 in einem bestimmten Abstand voneinander und parallel zueinander gelagerte, antriebstechnisch miteinander verbundene Fahrbahnsimulations-Walzen 3, 4 auf. Auf den Walzen 3, 4 laufen das Vorderrad 5 und das Hinterrad 6 des Zweirades 1. Am Tragrahmen 2 angeordnet ist eine parallel zu den Walzen 3, 4 verlaufende Querlaufschiene 7. Auf bzw. in der Querlaufschiene 7 ist ein Läufer 8 frei hin und her bewegbar, dieser ist jedoch quer zur Querlaufschiene exakt geführt. Außerdem ist eine Kippbegrenzung für das Motorrad 1 vorgesehen, die in der Zeichnung allerdings nicht dargestellt ist. Durch die Kippbegrenzung wird gewährleistet, daß das Motorrad 1 nur einen bestimmten, maximalen Neigungswinkel zu beiden Seiten einnehmen kann, also insbesondere nicht seitlich umkippen kann.

Der Läufer 8 ist über eine Schwinge 9 am Rahmen 10 des Zweirades 1 in einem ganz bestimmten Abstand von der Querlaufschiene 7 um eine horizontale Schwenkachse 11 schwenkbar angebracht. Zwischen dem Läufer 8 und der Schwinge 9 befindet sich eine Drehkupplung 12, die lediglich eine Drehung der Schwinge 9 gegenüber dem Läufer 8 um die Längsachse der Einheit aus Läufer 8 und Schwinge 9 erlaubt.

Wie Fig. 2 deutlich macht, befinden sich die Walzen 3, 4 in dem durch den Abstand des Vorderrades 5 vom Hinterrad 6 vorgegebenen Abstand voneinander und die Einheit aus Läufer 8 und Schwinge 9 ist exakt auf die Mitte des Hinterrades 6 ausgerichtet.

Die Fig. 1 und 2 zeigen im Zusammenhang nun, daß die Querlaufschiene 7 nahe der von den Laufflächen der Walzen 3, 4 gebildeten Ebene, vorzugsweise in dieser Ebene, verläuft und daß sich die Einheit aus Läufer 8 und Schwinge 9 von der Querlaufschiene 7 aus etwa horizontal erstreckt. Dies hat die im allgemeinen Teil der Beschreibung erläuterten Vorteile.

Die Querlaufschiene 7 könnte theoretisch, wie im Stand Technik, hinter dem Hinterrad 6 verlaufen. Es hat sich aber gezeigt, daß aus konstruktiven und fahrtechnischen Gründen eine Anordnung der Querlaufschiene 7 wie in Fig. 1 und 2 dargestellt besonders bevorzugt ist. Es hat sich nämlich gezeigt, daß die Querlaufschiene 7 möglichst nahe am Hinterrad 6 angeordnet sein sollte.

Bei einem normalen Motorrad 1 befindet sich der untere Rand des Rahmens 10 logischerweise deutlich oberhalb der von den Laufflächen des Vorderrades 5 und Hinterrades 6 bzw. der Walzen 3, 4 gebildeten Ebene. Deswegen empfiehlt es sich, daß, wie in Fig. 1 dargestellt, die Schwenkachse 11 der Schwinge 9 an einem von unten her am Rahmen 10 des Zweirades 1 anbringbaren Hilfsträger 13 angebracht ist. Der Hilfsträger 13 läßt sich ohne weiteres am Rahmen 10 eines Zweirades 1 anbringen, beispielsweise über Spannschrauben an den Rahmenrohren eines für Motorräder üblichen Doppelschleifenrahmens. Selbstverständlich muß der Hilfsträger 13 so massiv ausgeführt sein, daß er die bei der Simulation des Fahr- und Bremsverhaltens auftretenden Kräfte aufnehmen und übertragen kann.

Die Schwinge 9 bzw. der Hilfsträger 13 bieten einen idealen Ansatzpunkt für eine Kippbegrenzung. Nicht dargestellt ist dabei in der Zeichnung, daß im hier dargestellten Ausführungsbeispiel die Schwinge 9 bzw. der Hilfsträger 13 zur Realisierung der Kippbegrenzung mit einem Stützausleger versehen ist, daß an den Enden des Stützauslegers Laufrollen angeordnet sind und daß jeweils eine der Laufrollen bei Neigung des Zweirades 1 über einen bestimmten Winkel hinaus, vorzugsweise von unten her, an einer Lauffläche am Tragrahmen 2 abstützend zur Anlage kommt. Durch die Laufrollen, die auf der Lauffläche am Tragrahmen 2 abrollen, und zwar in Querrichtung, kann trotz der Neigungslage des Motorrades 1 eine seitliche Querverschiebung mit geringer Reibung erfolgen.

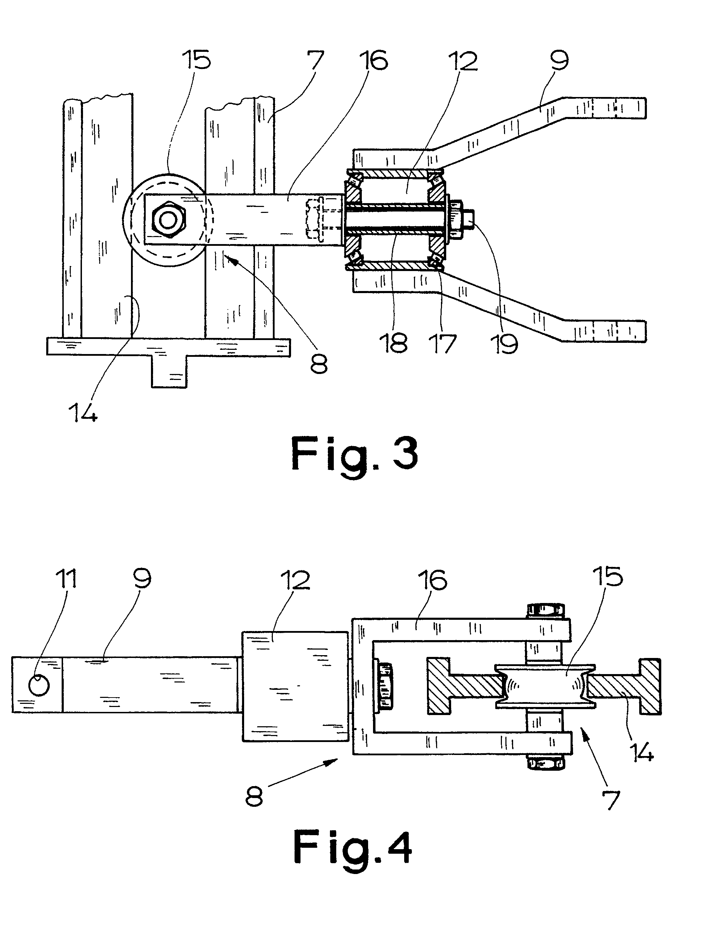

Fig. 3 und Fig. 4 zeigen nun eine besonders bevorzugte Ausgestaltung der Querschiene 7, die sich dadurch auszeichnet, daß zwei einander zugewandte, im wesentlichen horizontal liegende Schienenköpfe 14 vorgesehen sind und daß der Läufer 8 eine zwischen den Schienenköpfen 14 angeordnete, spulenartige Laufrolle 15 und eine die Querlaufschiene 7 von einer Seite her klauenartig umfassende, die Laufrolle 15 zwischen Schenkeln lagernde Gabel 16 aufweist.

Hinsichtlich der Drehkupplung 12 zeigt Fig. 3 ein sehr zuverlässig funktionierendes System, nämlich eine Drehkupplung 12 mit einem doppelten Schräg-Wälzlager. Das ergibt die erforderliche exakte Seitenführung bei leichter Drehbarkeit um die Längsachse. Wie solche doppelten Schräg-Wälzlager ausgeführt sind und wie deren vorgeschriebene Lagerkräfte eingestellt werden können, ist aus dem Stand der Technik bekannt. Man erkennt jedenfalls hier die üblichen Lagerringe 17 und eine Abstandshülse 18, die ein Überspannen mittels der Gewindeverbindung 19 verhindert.

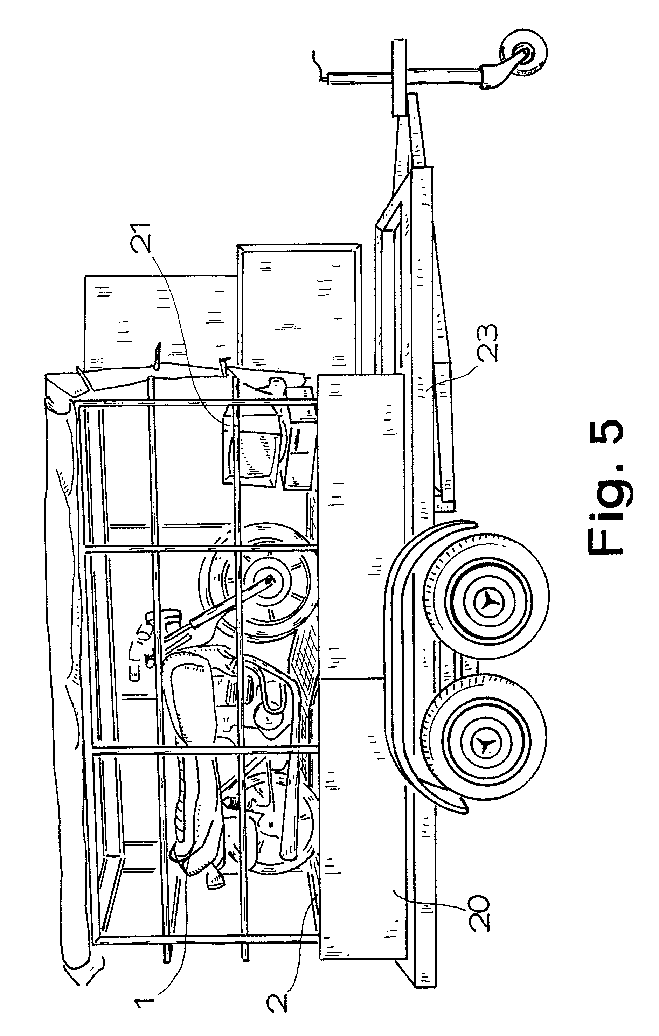

Damit das Zweirad 1 nicht seitlich von den Walzen 3, 4 herunterläuft empfiehlt es sich, daß den Walzen 3, 4 seitliche Querlaufbegrenzungen zugeordnet sind. Man kann hier an den Rädern 5, 6 des Zweirades 1 zur Anlage kommende Mitlaufrollen verwirklichen. Fig. 5 macht aber deutlich, daß die Querlaufbegrenzungen hier lediglich durch die Seitenwandungen 20 am Tragrahmen 2 realisiert sind.

Wie schon aus dem Stand der Technik bekannt, sind auch im hier dargestellten Ausführungsbeispiel die Walzen 3, 4 zur Einstellung ihres Abstandes voneinander im Tragrahmen 2 verschiebbar. Abgesehen davon, daß man dadurch unterschiedliche Radstände unterschiedlicher Motorräder 1 berücksichtigen kann, kann man auf diese Weise durch Einstellung des Abstandes der Walzen 3, 4 auch das Fahrverhalten in gewissen Grenzen beeinflussen. Beispielsweise kann man durch Umstellung der dem Vorderrad 5 zugeordneten Walze 3 den Nachlauf verändern, wodurch die Lenk- und Bremseigenschaften stark beeinflußt werden. Hier findet man gerade für Motorräder eine optimale Beeinflussungsmöglichkeit des Fahrverhaltens.

Es hat sich gezeigt, daß mit dem erfindungsgemäßen Fahrsimulator das Fahr- und Bremsverhalten außerordentlich einfach und wirklichkeitsnah simuliert werden kann. Nun hat ein solcher Fahrsimulator, bei dem das Motorrad 1 tatsächlich keine Fahrbewegung ausführt, aber einen prinzipiellen physikalischen Nachteil. Es fehlt nämlich die beim Beschleunigen und Bremsen normalerweise einen starken Einfluß ausübende Massenträgheit von Fahrzeug und Fahrer. Normalerweise führt die Massenträgheit beim Bremsen zu einer dynamischen Achslastverlagerung von der Hinterachse zur Vorderachse, also vom Hinterrad 6 auf das Vorderrad 5. Jeder Motorradfahrer weiß, daß die überwiegende Bremsleistung von der Vorderradbremse erbracht werden muß.

Im Rahmen der Lehre der Erfindung wird nun die dynamische Achslastverlagerung beim Bremsen dadurch simuliert, daß die Oberfläche der für das Hinterrad 6 des Zweirades 1 bestimmten Walze 4 mit einer die Reibungszahl verringernden Ausrüstung versehen, insbesondere eingewachst, ist. Da man für die Simulation des Fahrverhaltens dem Beschleunigen eine geringere Aufmerksamkeit widmen muß als dem Bremsen - das Beschleunigen kann man auch normalerweise in der Fahrschule üben, das Bremsen hingegen führt gleich zu risikoreichen Situation und kann jedenfalls nicht im Extrem geübt werden - kann man durch entsprechend langsames Beschleunigen der geringen Reibungszahl der Walze 4 ohne weiteres Rechnung tragen. Die geringe Reibungszahl der Walze 4, verglichen mit der Reibungszahl der Walze 3, wird also beim Abbremsen erst wirksam und führt zu einer Wirkung, die der dynamischen Achslastverlagerung auf verblüffende Weise ähnelt. Wachst man eine normale, handelsübliche Walze auf der Oberfläche ein, so braucht man praktisch weiteres nicht zu tun, die Wachsschicht haftet über viele Woche, ja Monate. Alternativ wäre es natürlich auch möglich, die Oberfläche der Walze 4 mit einer von vornherein aufgebrachten Beschichtung zu versehen, beispielsweise mit einer Teflonauflage od. dgl.

Bislang ist davon ausgegangen, daß, wie beim Stand der Technik, auch bei dem erfindungsgemäßen Fahrsimulator das Zweirad 1 selbst für den Antrieb sorgt. Normalerweise kann man also im Freien auf dem erfindungsgemäßen Fahrsimulator auch vom Motorgeräusch und von den Fahrvibrationen her wie auf einem normalen Motorrad 1 fahren. In Räumen allerdings sollte man ohne Eigenantrieb des Motorrades 1 fahren, dann empfiehlt es sich, daß die Walzen 3, 4, zumindest eine der Walzen 3, 4 von einem im Tragrahmen 2 gelagerten Antriebsmotor, insbesondere von einem Elektromotor, antreibbar sind.

Selbstverständlich empfiehlt es sich, mit dem Motorrad 1 auf dem erfindungsgemäßen Fahrsimulator nicht nur einfach zu "fahren", sondern eine solche Fahrt auch zu dokumentieren. Das ist für längerfristige Messungen am Motorrad 1, aber auch für Fahrschulzwecke von erheblicher Bedeutung. Erfindungsgemäß ist daher vorgesehen, daß ein elektrischer Auswertungsrechner 21 vorgesehen ist und dem Auswertungsrechner 21 als Meßwerte die Drehzahlen der Walzen 3, 4 und der Räder 5, 6 des Zweirades 1 sowie die Querposition des Zweirades 1 auf den Walzen 3, 4 herangezogen werden. Die zuvor erläuterten Meßwerte lassen Schlupf durch Überbremsung, Lenkausschläge usw. ausreichend gut erkennen. Selbstverständlich können auch noch eine Vielzahl anderer Meßwerte gemessen werden.

Die Drehzahlmessung der relevanten Drehzahlen der Walzen 3, 4 und der Vorder- und Hinterräder 5, 6 läßt sich mit üblichen mechanischen oder elektromechanischen Methoden vornehmen. Es hat sich aber gezeigt, daß für die hier vorgesehene Anwendung eine Drehzahlmessung über Lichtschrankensensoren 22 od. dgl. zweckmäßig ist. Lichtschrankensensoren 22 sind störunempfindlich und sehr exakt, sie werden ja in ähnlicher Weise auch beispielsweise bei Auswuchtgeräten verwendet.

Für die Übertragung der Meßwerte oder Auswertungsdaten empfehlen sich Lichtleitkabel. Es hat sich nämlich gezeigt, daß vom laufenden Motor des Motorrades 1 erhebliche Störungen ausgehen, die über die Kabel, wenn es denn herkömmliche Kabel sind, in die Elektronik eingekoppelt werden. Lichtleitkabel sind demgegenüber störunempfindlich.

Im Stand der Technik ist ein Kühllüfter vorgesehen. Ein solcher empfiehlt sich für die Motorkühlung des Motorrades 1 auch bei dem erfindungsgemäßen Fahrsimulator.

Erfindungsgemäß ist ferner erkannt worden, daß ein Fahrsimulator der in Rede stehenden Art zu aufwendig ist, um immer an einer Stelle nur eingesetzt zu werden. Es empfiehlt sich daher, den Fahrsimulator auf einem PKW-Anhänger 23 oder auch auf einem kleinem LKW anzuordnen. Dann kann dieser Fahrsimulator einer Mehrzahl von Fahrschulen jeweils tageweise zur Verfügung gestellt werden, um dort insbesondere kritische Bremsmanöver mit einem Motorrad 1 zu üben. Das war bislang bei Fahrschulen mit vertretbarem Aufwand nicht möglich.

Bei Versuchen mit dem erfindungsgemäßen Fahrsimulator hat es sich gezeigt, daß bei starkem Bremsen eine Neigung besteht, daß sich das Hinterrad 6 des Motorrades 1 von der hinteren Walze 4 nach innen herabzieht. Ursache dafür ist die nachgebende, einen erheblichen Federweg aufweisende Feder-/Dämpfer-Einheit an der Hinterachse des Motorrades 1. Es empfiehlt sich, für die Fahrsimulation die Feder-/Dämpfer-Einheit 24 am Hinterrad 6 des Motorrades 1 zu blockieren, oder auszubauen und gegen eine starre Verbindung zu ersetzen.

## Patentansprüche

1. Fahrsimulator in Form eines Rollenprüfstandes für ein Zweirad (1), insbesondere ein mit eigener Motorkraft angetriebenes Zweirad (1), mit einem Tragrahmen (2), mit in dem Tragrahmen (2) in einem bestimmten Abstand voneinander und parallel zueinander gelagerten, antriebstechnisch miteinander verbundenen Fahrbahnsimulations-Walzen (3, 4), auf denen das Vorderrad (5) und das Hinterrad (6) des Zweirades (1) laufen, mit einer am Tragrahmen (2) parallel zu den Walzen (3, 4) angeordneten Querlaufschiene (7), mit einem auf bzw. in der Querlaufschiene (7) frei hin und her bewegbaren, quer zur Querlaufschiene (7) jedoch exakt geführten Läufer (8) und mit einer Kippbegrenzung für das Zweirad (1), wobei der Läufer (8) über einen Schwinge (9) am Rahmen (10) des Zweirades (1) in einem ganz bestimmten Abstand von der Querlaufschiene (7) um eine horizontale Schwenkachse (11) schwenkbar anbringbar ist, wobei sich die Einheit aus Läufer (8) und Schwinge (9) von der Querlaufschiene (7) aus etwa horizontal erstreckt und wobei zwischen dem Läufer (8) und der Schwinge (9) eine lediglich eine Drehung der Schwinge (9) gegenüber dem Läufer (8) um die Längsachse der Einheit aus Läufer (8) und Schwinge (9) erlaubende Drehkupplung (12) vorgesehen ist, **dadurch gekennzeichnet,** daß die Querlaufschiene (7) nahe der für das Hinterrad (6) bestimmten Walze (4) und in der von den Laufflächen der Walzen (3, 4) gebildeten Ebene oder nahe an dieser Ebene verläuft.

2. Fahrsimulator nach Anspruch 1, dadurch gekennzeichnet, daß die Querlaufschiene (7) zwischen den Walzen (3, 4) angeordnet ist.

3. Fahrsimulator nach Anspruch 1 oder 2, dadurch gekennzeichnet, daß die Schwenkachse (11) der Schwinge (9) an einem von unten her am Rahmen (10) des Zweirades (1) anbringbaren Hilfsträger (13) angebracht ist.

4. Fahrsimulator nach einem der Ansprüche 1 bis 3, dadurch gekennzeichnet, daß die Schwinge (9) bzw. der Hilfsträger (13) zur Realisierung der Kippbegrenzung mit einem Stützausleger versehen ist, daß an den Enden des Stützauslegers Laufrollen angeordnet sind und daß jeweils eine der Laufrollen bei Neigung des Zweirades (1) über einen bestimmten Winkel hinaus, vorzugswiese von unten her, an einer Lauffläche am Tragrahmen (2) abstützend zur Anlage kommt.

5. Fahrsimulator nach einem der Ansprüche 1 bis 4, dadurch gekennzeichnet, daß die Querlaufschiene (7) aus zwei einander zugewandten, im wesentlichen horizontal liegenden Schienenköpfen (14) besteht und daß der Läufer (8) eine zwischen den Schienenköpfen (14) angeordnete, spulenartige Laufrolle (15) und eine die Querlaufschiene (7) von einer Seite her klauenartig umfassende, die Laufrolle (15) zwischen Schenkeln lagernde Gabel (16) aufweist.

6. Fahrsimulator nach einem der Ansprüche 1 bis 5, dadurch gekennzeichnet, daß den Walzen (3, 4) seitliche Querlaufbegrenzungen zugeordnet sind und/oder daß die Walzen (3, 4) zur Einstellung ihres Abstandes voneinander im Tragrahmen (2) verschiebbar sind, und/oder daß die Oberfläche der für das Hinterrad (6) des Zweirades (1) bestimmten Walze (4) mit einer die Reibungszahl verringernden Ausrüstung versehen, insbesondere eingewachst ist, und/oder daß die Walzen (3, 4), zumindest eine der Walzen (3, 4), von einem im Tragrahmen (2) gelagerten Antriebsmotor, insbesondere von einem Elektromotor, antreibbar sind.

7. Fahrsimulator nach einem der Ansprüche 1 bis 6, dadurch gekennzeichnet, daß ein elektronischer Auswertungsrechner (21) vorgesehen ist und dem Auswertungsrechner (21) als Meßwerte die Drehzahlen der Walzen (3, 4) und der Räder (5, 6) des Zweirades (1) sowie die Querposition des Zweirades (1) auf den Walzen (3, 4) herangezogen werden, daß, vorzugsweise, die Drehzahlmessung über Lichtschrankensensoren (22) od. dgl. erfolgt und daß, vorzugsweise, die Übertragung von Meßwerten oder Auswertungsdaten über Lichtleitkabel erfolgt.

8. Fahrsimulator nach einem der Ansprüche 1 bis 7, dadurch gekennzeichnet, daß ein Motorkühllüfter vorgesehen ist.

9. Fahrsimulator für ein Zweirad (1), mit einem Tragrahmen (2) und in dem Tragrahmen (2) gelagerten Fahrbahnsimulations-Walzen (3, 4) nach einem der Ansprüche 1 bis 8, dadurch gekennzeichnet, daß der Tragrahmen (2) auf einem PKW-Anhänger (23) angeordnet ist.

10. Verfahren zur Simulation des Fahrverhaltens eines Motorrades (1) auf einem Fahrsimulator nach einem der Ansprüche 1 bis 9, dadurch gekennzeichnet, daß die Feder-/Dämpfer-Einheit (24) am Hinterrad (6) des Motorrades (1) blockiert, oder ausgebaut und gegen eine starre Verbindung ersetzt wird.

# Fig.1

# Fig.2

Fig. 3

Fig.4

**Fig. 5**

EP 0 453 766 A2